# EUROPÄISCHE PATENTANMELDUNG

(11) **EP 1 152 211 A2**
(43) Veröffentlichungstag der Anmeldung: **07.11.2001**
(21) Anmeldenummer: 01109784.7
(22) Anmeldetag: 20.04.2001
(51) Int. Cl.: G01B 11/06

(54) **Optische Messanordnung insbesondere zur Schichtdickenmessung**

(30) Priorität: 02.05.2000 DE 10021379
(71) Anmelder: Leica Microsystems Jena GmbH, 07745 Jena (DE)
(72) Erfinder: Engel, Horst, Dr., 35394 Giessen (DE); Mikkelsen, Hakon, Dr., 99441 Magdala (DE); Danner, Lambert, 35584 Wetzlar-Naunheim (DE); Slodowski, Matthias, 07743 Jena (DE); Backhaus, Kuno, 07751 Zöllnitz (DE); Wienecke, Joachim, Dr., 07747 Jena (DE)
(74) Vertreter: Reichert, Werner F., Dr.

(57) **Zusammenfassung**

Die Erfindung bezieht sich auf eine optische Meßanordnung, insbesondere zur Schichtdickenmessung sowie zur Ermittlung optischer Materialeigenschaften wie Brechungsindex, Extinktionsfaktor usw. einer Probe (P), mit einer Beleuchtungseinrichtung (1) zur Abgabe eines Meßlichtstrahls (6), einem Strahlteiler (8) zur Aufteilung des Meßlichtstrahls (6) in einen Objektlichtstrahl (10) und einen Referenzlichtstrahl (9), einem Meßobjektiv zum Ausrichten des Objektlichtstrahls (10) auf einen Meßort (M) an der Oberfläche der Probe (P) und zum Erfassen des an dem Meßort (M) reflektierten Lichtes des Objektlichtstrahls (10), sowie einer Auswerteeinrichtung (11), in welche der von der Probe (P) reflektierte Objektlichtstrahl (10) und der Referenzlichtstrahl (9) eingekoppelt sind, zum Erhalt von Informationen über die Probe (P), insbesondere über an dieser vorhandene Schichtdicken. Zur Einkopplung des Objektlichtstrahls (10) und des Referenzlichtstrahls (9) in die Auswerteeinrichtung (11) sind Lichtleiteinrichtungen (23, 25) mit einer Vielzahl von Lichtleitfasern vorgesehen. Hierdurch wird eine kompakte, flexibel aufstellbare und störungsunempfindliche optische Meßanordnung geschaffen, die sich besonders zur automatischen Überwachung kontinuierlicher Produktionsvorgänge, insbesondere bei der Halbleiterchip-Herstellung, eignet.

## Beschreibung

Die Erfindung bezieht sich auf eine optische Meßanordnung, insbesondere zur Schichtdickenmessung sowie zur Ermittlung optischer Materialeigenschaften einer Probe, umfassend eine Beleuchtungseinrichtung zur Abgabe eines Meßlichtstrahles, einen Strahlteiler zur Aufteilung des Meßlichtstrahles in einen Objektlichtstrahl und einen Referenzlichtstrahl, ein Meßobjektiv zum Ausrichten des Objektlichtstrahls auf einen Meßort an der Oberfläche der Probe und zum Erfassen des von dem Meßort reflektierten Lichtes, und eine Auswerteeinrichtung, in welche der von der Probe reflektierte Objektlichtstrahl und der Referenzlichtstrahl eingekoppelt sind, um Informationen über die Probe, insbesondere über an dieser vorhandene Schichtdicken zu erhalten.

Optische Meßanordnungen, die nach dem Prinzip der Spektralphotometrie arbeiten, so wie deren besondere Verwendung zur Schichtdickenmessung sind aus dem Stand der Technik in vielfältiger Art und Weise bekannt. Ihr Einsatz hat sich insbesondere bei der Messung von dünnen Schichten und optischen Parametern (wie Brechungsindex n, Extinktionsfaktor k) von Ein- und Mehrschichtsystemen an strukturierten Wafern bewährt.

Da gerade bei der Waferherstellung immer feinere Strukturen und dünnere Schichten angestrebt werden, steigen die Anforderungen an die Genauigkeit der optischen Meßanordnungen, mit denen die Maßhaltigkeit der Strukturen und Schichten nachgewiesen werden kann. Im Zuge dieser Entwicklung besteht ein Interesse daran, Messungen sowohl an Einfachschichtsystemen wie auch an Mehrfachschichtsystemen vorzunehmen. Zudem sollen dünne Schichten mit Dicken ab etwa 1 nm wie auch dickere Schichten bis zu etwa 50 µm mit der gleichen optischen Meßanordnung exakt vermessen werden können.

Neben der Forderung nach einer erhöhten Genauigkeit ist auch das Bestreben nach wachsenden Produktionsstückzahlen zu berücksichtigen. So ist es beispielsweise bei der kontinuierlichen Fertigung von Wafern erforderlich, diese in immer kürzer werdenden Abständen und möglichst online zu vermessen. Andererseits sind bei der Eingliederung einer optischen Meßanordnung in eine kontinuierliche Produktionslinie auch die räumlichen Gegebenheiten zu berücksichtigen. Die Anordnung soll einen geringen Bauraum beanspruchen und flexibel aufstellbar sein. Wünschenswert ist insbesondere auch die Eignung zur schnellen Anpassung an sich verändernde räumliche Gegebenheiten. Hierbei sind allerdings stets die Genauigkeitsanforderungen im Auge zu behalten.

Eine optische Meßanordnung der eingangs genannten Art ist beispielsweise aus der US 5,486,701 A bekannt. Diese basiert auf dem Prinzip der Spektralanalyse des von einem Meßort reflektierten Lichtes, wobei jeder Dicke ein durch Interferenz bedingtes, charakteristisches Reflexionsspektrum zugeordnet ist. Die in der US 5,486,701 A offenbarte optische Meßanordnung ist jedoch auf die Vermessung extrem dünner Schichten spezialisiert. Hierzu wird eine separate Auswertung des UV-Bereichs und des sichtbaren Bereichs des reflektierten Lichtes vorgenommen, um hieraus dann die eigentlichen Informationen über den Meßort an der Probe zu erhalten. Durch eine Vielzahl von in den Strahlengang eingegliederten optischen Baugruppen ergibt sich ein komplizierter und gegen äußere Einflüsse empfindlicher Aufbau. Die optischen Ablenkeinrichtungen, welche einen von der Beleuchtungseinrichtung abgegebenen Meßlichtstrahl zu der Probe und weiterhin zu der Auswerteeinrichtung übertragen, schränken die konstruktiven Möglichkeiten im Hinblick auf einen kompakten Aufbau weiter ein.

Die laterale Auflösbarkeit von Strukturen an der Probe ist von der Wellenlänge des verwendeten Meßlichtes abhängig. Mit Licht kürzerer Wellenlänge lassen sich feinere Strukturen auflösen. Im Zusammenhang mit der Messung sehr dünner Schichten im Bereich von weniger als einem Zehntel der Meßlicht-Wellenlänge ist weiterhin zu berücksichtigen, daß die auszuwertenden Helligkeitsunterschiede, aus denen die Informationen über eine Schichtdicke gewonnen werden, sehr klein werden. Gerade bei dünnen Schichten kommt es darauf an, das von der Probe reflektierte Licht möglichst verlust- und störungsfrei an eine Auswerteeinrichtung zu übertragen.

Vor diesem Hintergrund liegt der Erfindung die Aufgabe zugrunde, eine optische Meßanordnung zu schaffen, die bei einem einfachen und kompakten Aufbau die Gewinnung genauer Informationen über Eigenschaften einer zu untersuchenden Probe, insbesondere von strukturierten als auch unstrukturierten Wafern, erlaubt.

Diese Aufgabe wird mit einer optischen Meßanordnung der eingangs genannten Art gelöst, bei der zur Einkopplung des Objektlichtstrahls und des Referenzlichtstrahls in die Auswerteeinrichtung Lichtleiteinrichtungen mit einer Vielzahl von Lichtleitfasern vorgesehen sind.

Die Anordnung der im Bereich optischer Anwendungen an sich bekannten Lichtleiteinrichtungen an diesem konkreten Ort ermöglicht einen guten Kompromiß zwischen einer möglichst unverfälschten Übertragung des Meßlichtes, d. h. eines von der Probe unbeeinflußten Anteils, nämlich eines Referenzlichtstrahls und eines von der Probe beeinflußten Anteils, nämlich eines Objektlichtstrahles, und einem besonders kompakten und gleichzeitig flexiblen Aufbau der optischen Meßanordnung, die sich hierdurch besonders zur Aufstellung in kontinuierlichen Produktionslinien eignet.

Die Verwendung der Lichtleiteinrichtungen unmittelbar am Eingang der Auswerteeinrichtung erlaubt eine flexible Anordnung derselben zu dem Meßobjektiv. Überdies ist die Anordnung gegenüber Störungseinflüssen aus dem Produktionsvorgang, beispielsweise gegenüber Erschütterungen, unempfindlich.

Bevorzugt wird für den Objektlichtstrahl und den Referenzlichtstrahl jeweils eine eigene Lichtleiteinrichtung verwendet, so daß die Strahlführung voneinander unabhängig und damit weitestgehend frei entsprechend den jeweils vorherrschenden räumlichen Bedingungen vorgenommen werden kann.

In einer weiteren, vorteilhaften Ausgestaltung sind die ausgangsseitigen Enden der Lichtleitfasern am Eingang der Auswerteeinrichtung in Entsprechung zu einem an der Auswerteeinrichtung vorgesehenen Empfänger angeordnet. Hierdurch läßt sich eine optimale Ausbeute des von der Probe reflektierten Lichtes erhalten. Im Hinblick auf marktübliche Auswerteeinrichtungen, wie beispielsweise Spektrographen mit nachgeschaltetem CCD-Detektor werden die ausgangsseitigen Enden der Lichtleitfasern bevorzugt linienartig angeordnet.

Zur Erzielung einer möglichst deutlichen Unterscheidung von Maxima und Minima im Spektrum des von der Probe reflektierten Objektlichtstrahls ist in einer weiteren, vorteilhaften Ausgestaltung der Erfindung in dem Meßlichtstrahl vor dem Strahlteiler eine Aperturblende angeordnet. Bevorzugt weist die Aperturblende eine Durchtrittsöffnung in der Form eines Viertelkreisringes, im folgenden auch Viertelpupille, auf. Dies ermöglicht eine getrennte Führung des einfallenden und ausfallenden Lichtes an dem Meßobjektiv sowie die zusätzliche Einkopplung des Lichtes einer Fokussiereinrichtung in das Meßobjektiv, um die Probe relativ zu dem Meßobjektiv auszurichten.

Um das Licht in der Apertur optimal auszunutzen, können die eingangsseitigen Enden der Lichtleitfasern für den Objektlichtstrahl und den Referenzlichtstrahl über eine Fläche verteilt angeordnet werden, auf welche die Form der Öffnung der Aperturblende abgebildet wird. Die Einhüllkurve der Lichtleitfasern entspricht im wesentlichen der Kontur der Öffnung der Aperturblende. Hierbei wird zweckmäßigerweise auch sichergestellt, daß die vollständige Ausleuchtung der Eingangsseiten der Lichtleiteinrichtungen unabhängig von der Größe eines Meßfensters auf der Probe bzw. von der Einstellung der Feldblende und des Pinholespiegels bleibt.

Bevorzugt werden Lichtleiteinrichtungen zu verwendet, bei denen die Lagezuordnung unter den eingangsseitigen und ausgangsseitigen Enden der einzelnen Lichtleitfasern zufällig ist. Für besondere Meßaufgaben kann es jedoch vorteilhaft sein, wenn gleiche Bereiche des Referenzlichtstrahls und des Objektlichtstrahls miteinander verglichen werden können. Zu diesem Zweck kann beispielsweise die Lagebeziehung zwischen den eingangsseitigen und ausgangsseitigen Enden für jede Lichtleiteinrichtung experimentell bestimmt und diese Lagebeziehung bei der Auswertung der in der Auswerteeinrichtung erhaltenen Signale berücksichtigt werden. Auch ist es denkbar, die eingangsseitigen und ausgangsseitigen Enden der Lichtleitfasern für beide Lichtleiteinrichtungen in gleicher Lagebeziehung zueinander anzuordnen.

Bisweilen besteht ein Interesse daran, auch das weitere Umfeld des selbst sehr kleinen Meßortes an der Probe zu beobachten. Prinzipiell kann dies in einem gewissen Umfang durch ein Umschalten des Meßobjektives erfolgen. Allerdings wird hierdurch der apparative Aufwand für die eigentliche Meßanordnung vergrößert. Auch können die dann erforderlichen Schalteinrichtungen die Qualität des Objektlichtstrahles beeinträchtigen. In einer vorteilhaften Ausgestaltung der Erfindung ist daher ein weiteres Objektiv vorgesehen, in welches Licht der Beleuchtungseinrichtung zum Aufbringen auf einen Beobachtungsort an der Probe einblendbar ist, wobei die Einkopplung des Meßlichtes in das weitere Objektiv über eine von dem Meßlichtstrahl getrennte Übertragungseinrichtung erfolgt. Die nahezu vollständige, systematische und apparative Trennung der Beobachtung des Umfeldes des Meßortes von der Beobachtung des eigentlichen Meßortes ermöglicht einen modularen Aufbau, so daß das weitere Objektiv mit der zugehörigen Übertragungseinrichtung als optional verwendbares Modul ausgebildet werden kann. Andererseits bleibt durch die Verwendung des Lichtes der an der optischen Meßanordnung ohnehin stets vorhandenen Beleuchtungseinrichtung der zusätzliche apparative Aufwand für dieses Modul gering. Selbstverständlich kann das weitere Objektiv auch zu zusätzlichen Untersuchungen an der Probe verwendet werden.

Bevorzugt ist das von dem weiteren Objektiv aufgefangene Licht in eine Einrichtung zur visuellen Darstellung einkoppelbar. Damit kann beispielsweise der Meßvorgang online beobachtet werden. Auch ist es möglich, die visuell erhaltenen Informationen zusätzlich aufzuzeichnen.

Zur Messung besonders dünner Schichten besteht ein Interesse daran, ein Meßlicht mit möglichst kurzer Wellenlänge, d. h. im tiefen UV-Bereich zu verwenden. Für die Spektralphotometrie wäre hierbei ein senkrechter Einfall der Beleuchtung auf den Meßort der Probe von Vorteil, da sich dann Polarisationseffekte vermeiden ließen. In einem solchen Fall, d. h. bei einer sehr kleinen numerischen Apertur, erhielte man ein Spektrum, bei dem keine Vermischung von reflektierten Lichtspektren von dem Licht auftreten würde, das mit unterschiedlichen Einfallswinkeln auf den Meßort aufgebracht worden ist. Eine sehr kleine Apertur bedeutet andererseits jedoch, daß nur eine sehr geringe Lichtmenge für den Meßzweck zur Verfügung steht.

Vor diesem Hintergrund hat es sich als vorteilhaft erwiesen, als Meßobjektiv ein Spiegelobjektiv mit einer numerischen Apertur kleiner als 0,3 einzusetzen und weiterhin eine Beleuchtungseinrichtung zu verwenden, die eine Halogenlampe und eine Deuteriumlampe umfaßt. Unter diesen Voraussetzungen lassen sich auch bei sehr dünnen Strukturen Interferenzspektren mit ausreichenden Intensitätsunterschieden zwischen den Minima und Maxima erhalten. Durch die Vermeidung von glasoptischen Elementen werden die spektralen Abbildungsfehler stark eingeschränkt.

Die Erfindung wird nachfolgend anhand eines in der Zeichnung dargestellten Ausführungsbeispiels näher erläutert. Die Zeichnung zeigt in:
- Fig.1: ein Ausführungsbeispiel einer optischen Meßanordnung, die hier zur Schichtdickenmessung eingesetzt wird,
- Fig.2: eine Detailansicht einer Aperturblende, die in der optischen Meßanordnung nach Fig.1 vor einem Strahlteiler zur Aufspaltung eines Meßlichtstrahles angeordnet ist,
- Fig.3: eine schematische Darstellung von in der optischen Meßanordnung nach Fig.1 verwendeten Lichtleiteinrichtungen,
- Fig.4: ein Detail einer Beleuchtungseinrichtung mit der Veranschaulichung einer Durchblicköffnung einer Deuteriumlampe mit der Wendel einer Halogenlampe, und
- Fig.5: die Abbildung der Wendel der Halogenlampe in die Öffnung der Aperturblende.

Das Ausführungsbeispiel zeigt eine optische Meßanordnung zur Schichtdickenmessung nach dem Prinzip der Spektralphotometrie, die beispielsweise in einer Fertigungslinie zur Waferherstellung angeordnet werden kann, um die Oberflächen der Wafer zu kontrollieren. Sie eignet sich besonders zur Vermessung von dünnen, teilweise transparenten Schichten, kann jedoch auch für dickere Schichten verwendet werden. Auch lassen sich optische Parameter von Ein- und Mehrfachschichtsystemen bestimmen.

Die Meßanordnung umfaßt zunächst eine Beleuchtungseinrichtung 1, in der das für die Messung benötigte Meßlicht erzeugt wird. In der Beleuchtungseinrichtung 1 ist eine Halogenlampe 2 vorgesehen, die für eine hohe Lichtausbeute bevorzugt mit Xenon gefüllt ist. Weiterhin ist zwischen der Halogenlampe 2 und dem Ausgang des Meßlichtes aus der Beleuchtungseinrichtung 1 eine Deuteriumlampe 3 angeordnet, die als UV-VIS-Lichtquelle dient. Zur Vermeidung von größeren Lichtintensitätsfluktuationen weist die Deuteriumlampe 3 ein internes Deep-UV-Filter (DUV) auf, mit dem Licht unterhalb einer Wellenlänge von 190 nm ausgefiltert wird, um die Entstehung von Ozon zu vermeiden. Lampen, bei denen ein solches Filter fehlt, sind für Untersuchungen bei kurzen Wellen ungeeignet, da aufgrund der Lichtabsorption durch das Ozon bei einer Wellenlänge um λ = 250 nm Intensitätsschwankungen auftreten, die sich als Lampenunruhe bemerkbar machen.

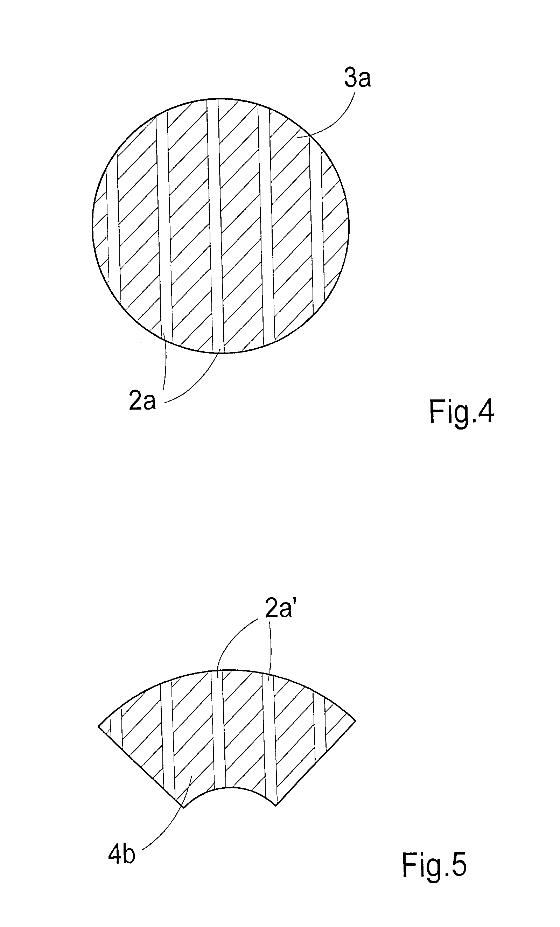

In dem dargestellten Ausführungsbeispiel besitzt die Deuteriumlampe 3 eine Durchblicköffnung 3a, die in Fig.4 dargestellt ist. Diese Durchblicköffnung 3a wie auch die Vorderseite einer Wendel 2a der Halogenlampe 2 werden in der Ebene einer weiter unten genauer zu erläuternden Aperturblende 4 scharf abgebildet. Hierzu ist der Deuteriumlampe 3 in Richtung des Lichtaustrittes aus der Beleuchtungseinrichtung 1 eine geeignete Linsenanordnung 5 zur Bündelung eines Meßlichtstrahls 6 nachgeschaltet.

Bei Verwendung einer in der Zeichnung nicht dargestellten, herkömmlichen Deuteriumlampe ohne Durchblicköffnung 3a wird zusätzlich ein Klappspiegel vorgesehen, mit dem abwechselnd Licht von der Deuteriumlampe oder von der Halogenlampe zu der Aperturblende 4 gelenkt werden kann.

Durch die gemeinsame Verwendung einer Deuteriumlampe 3 mit Durchblicköffnung 3a zusammen mit einer Halogenlampe 2 kann hingegen stets ein Meßlichtstrahl in einem Wellenlängenbereich von 190 nm bis 800 nm zur Verfügung gestellt werden, wobei sich hier dann eine besonders einfache Art und Weise der Anordnung verwirklichen läßt. Im Unterschied zu einer Klappspiegelanordnung, mit der abwechselnd entweder das Licht der Deuteriumlampe oder der Halogenlampe eingeblendet werden kann, entfällt bei der dargestellten Ausführungsform der Umschaltvorgang des Klappspiegels, wodurch ein höherer Probendurchsatz an der Meßanordnung begünstigt wird. Prinzipiell ist es jedoch auch möglich, Licht aus beiden Quellen über geeignete, stationäre Spiegelanordnungen auf die Aperturblende 4 zu richten.

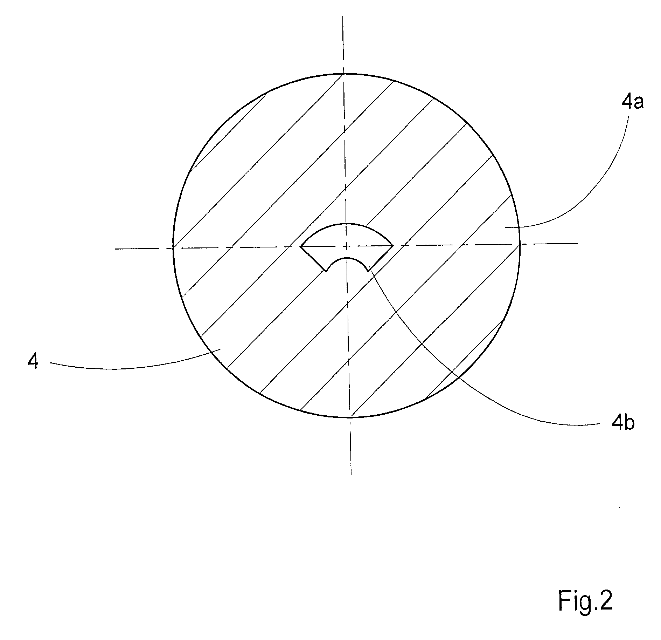

Die bereits erwähnte Aperturblende 4 ist in Fig.2 im Detail dargestellt. Diese wird durch eine lichtundurchlässige Metallfolie 4a gebildet, in der mittig eine lichtdurchlässige, glasfreie Aperturöffnung 4b vorgesehen ist. Die Aperturöffnung 4b weist in dem dargestellten Ausführungsbeispiel die Form eines Viertelkreisringes auf und entspricht damit einer Viertelpupillenöffnung eines nachfolgend noch näher erläuterten Spiegelobjektivs 15. Fig.5 zeigt die scharfe Abbildung 2a' der Wendel 2a der Halogenlampe 2 in der Öffnung 4b der Aperturblende 4. Diese wird durch einen Quarzkollektor erreicht. Eine weitere Quarzlinse vor der Aperturblende 4 bildet die Rückseite des Quarzkollektors in eine der Aperturblende 4 nachgeschaltete Feldblende 7 mit dem Verhältnis 1:1 ab.

Der durch die Aperturblende 4 hindurchdringende Anteil des Meßlichtstrahls 6 durchläuft eine Feldblende 7 und trifft anschließend auf einen Strahlteiler 8 in Form eines halbdurchlässigen Ablenkspiegels. Mit dem Strahlteiler 8 wird der Meßlichtstrahl 6 in einen Referenzlichtstrahl 9 und einen Objektlichtstrahl 10 aufgeteilt. Ersterer wird unmittelbar zu einer Auswerteeinrichtung 11 geleitet, wohingegen der Objektlichtstrahl 10 zunächst auf einen Meßort M an der Oberfläche der Probe P gelenkt wird. Der von dem Meßort M reflektierte Objektlichtstrahl 10 wird anschließend ebenfalls der Auswerteeinrichtung 11 zugeführt. Der Rückreflex vom Strahlteiler 8 gelangt dabei nicht in den Referenzlichtstrahlengang.

Die Auswerteeinrichtung 11 umfaßt einen Spektrographen 12, dessen Spektrum auf die Empfangsmatrix eines CCD-Detektors 13 gerichtet ist.

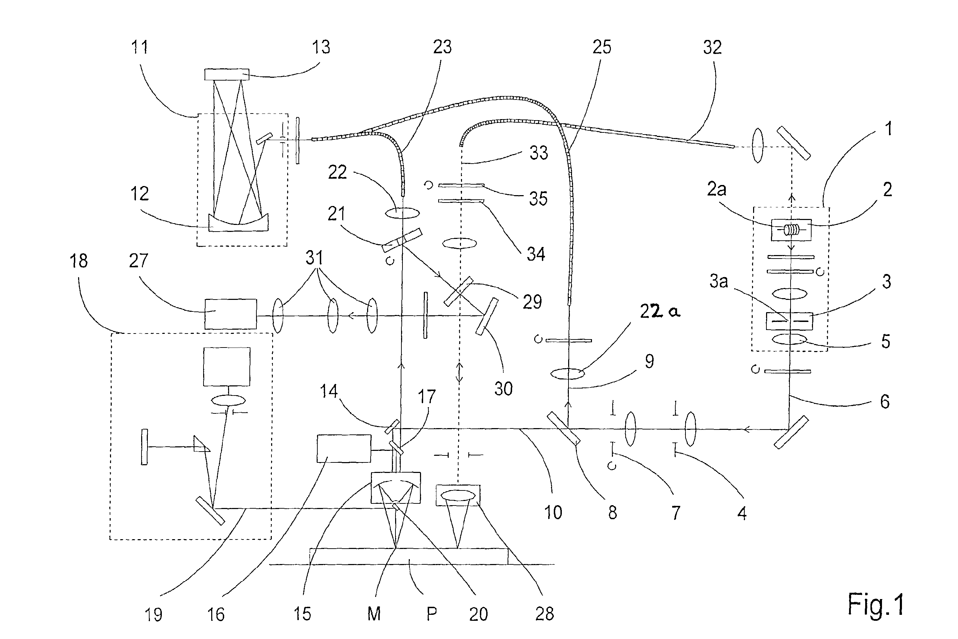

Wie Fig.1 entnommen werden kann, wird der Objektlichtstrahl 10 über einen Halbspiegel in die Eingangspupille eines Spiegelobjektives 15 eingeblendet. Eine der Feldblende 7 vorgeschaltete Quarzlinse bildet hierzu die Aperturblende 4 mit dem Verhältnis 1:1 in die Eingangspupille des Spiegelobjektives 15 ab. Durch die Anordnung der Quarzlinsen in der Nähe der Blenden 4 und 7 bleibt die chromatische Aberration gering.

Über das Spiegelobjektiv 15 wird der Objektlichtstrahl 10 weitgehend senkrecht auf den Meßort M gerichtet. Das Spiegelobjektiv 15 ist mit einer numerischen Apertur kleiner 0,3 ausgebildet. Beispielsweise wird hier ein Spiegelobjektiv mit einer 15-fachen Vergrößerung und einer numerischen Apertur von 0,28 verwendet.

Für eine hohe Meßgenauigkeit ist es erforderlich, daß der Objektlichtstrahl 10 auf dem Weg zu dem Meßort M nicht durch Kanten oder Stege beeinträchtigt wird. Andererseits muß ein in dem Spiegelobjektiv 15 vorgesehener, mittig angeordneter Sekundärspiegel an einem Gehäuseabschnitt des Spiegelobjektives 15 befestigt werden. Dies erfolgt bevorzugt durch in der Zeichnung im Detail nicht dargestellte, stegartige Halterungen, wobei im vorliegenden Fall insgesamt vier Stege vorgesehen sind, die sich jeweils zwischen einem Primärspiegel und dem Sekundärspiegel des Spiegelobjektives 15 erstrecken. Die Öffnung 4b der Aperturblende 4 ist dabei solchermaßen gewählt und angeordnet, daß der Objektlichtstrahl 10 zwischen zwei benachbarten Stegen des Spiegelobjektivs 15 unbeeinflußt hindurchgelangt. Bei einer anderen Anzahl von Stegen ist die Form der Öffnung 4b der Aperturblende 4 entsprechend anzupassen, um Beeinträchtigungen des Objektlichtstrahles 10 zu vermeiden. Durch die Viertelpupillenteilung in dem Spiegelobjektiv 15 werden für das Spektrometer 12 insgesamt lediglich zwei Viertelpupillen benötigt, wohingegen die verbleibenden zwei Viertelpupillen anderweitig verwendet werden können, wie im folgenden erläutert wird.

Als weitere Voraussetzung für eine hohe Meßgenauigkeit ist eine präzise Fokuslage des Meßortes M zu gewährleisten. Zu diesem Zweck ist die Meßanordnung mit einem Fokusmeßsystem 16 ausgestattet, bei dem es sich beispielsweise um einen Laserautofokus nach einem aus dem Stand der Technik bekannten Prinzip handelt. Dabei wird, wie in Fig.1 angedeutet, das Licht einer Laserdiode in Form eines Fokusmeßstrahls mit einem Spiegel 17 durch das Spiegelobjektiv 15 auf die Probe P gelenkt, wozu die verbleibenden zwei Viertelpupillen verwendet werden. Die Einkopplung des Fokusmeßsystems 16 erfolgt über einen Schmetterlingsspiegel mit doppelter Viertelpupillenform, so daß das Licht des Fokusmeßstrahls schräg auf die Probenoberfläche fällt. Nur wenn die Probenoberfläche in der Fokusebene liegt, entsteht ein zur optischen Achse des Spiegelobjektives 15 symmetrischer Leuchtfleck. Ist die Probenoberfläche in Richtung der optischen Achse verschoben, d. h. liegt die Probenoberfläche außerhalb der Fokusebene, ist der Leuchtfleck seitlich zur optischen Achse verschoben. In diesem Fall wird ein zur Abweichung aus der Fokusebene proportionales Meßsignal erzeugt, das über ein angeschlossenes Stellsystem zur Nachstellung der Fokuslage genutzt werden kann.

Zur Korrektur der Nivellierung, d. h. zum Ausgleich von Winkelabweichungen in der Größenordnung einer Winkelminute zwischen der Normalen auf die Probenoberfläche am Meßort M und der optischen Achse des Spiegelobjektivs 15 ist weiterhin eine Nivellieranordnung 18 vorgesehen, deren Richtungskontrollstrahl 19 am Meßort M auf die Probenoberfläche gerichtet ist. Die Einblendung des Richtungskontrollstrahls 19 auf den Meßort M erfolgt über einen im Schatten des Sekundärspiegels des Spiegelobjektives 15 angeordneten Umlenkspiegel 20. Hierdurch wird eine Beeinträchtigung des Objektlichtstrahls 10 durch die Nivellieranordnung 18 vermieden.

Der aus dem Spiegelobjektiv 15 rückseitig austretende, reflektierte Objektlichtstrahl 10 erreicht nach Durchtritt durch einen Pinhole-Spiegel 21 und durch eine Sammellinse 22 den Eingang einer Lichtleiteinrichtung 23.

Der Pinholespiegel 21 ist teildurchlässig ausgebildet, so daß über diesen ein Teil des aus dem Spiegelobjektives 15 kommenden Objektlichtstrahls 10 zu weiteren Untersuchungs- oder auch Beobachtungszwecken abgezweigt werden kann.

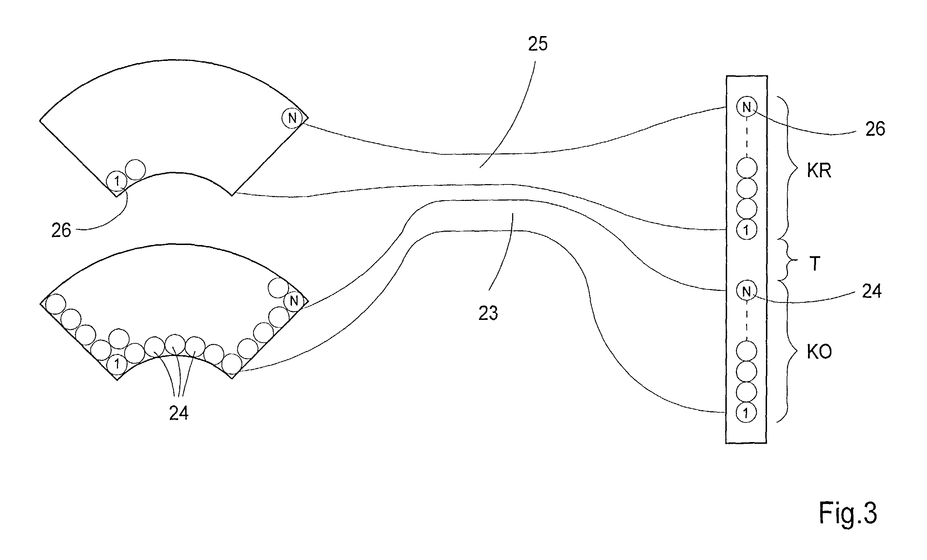

Durch die Sammellinse 22 wird der verbleibende Anteil des reflektierten Objektlichtstrahls 10 mit der durch die Aperturblende 4 definierten Form auf den Eingang der Lichtleiteinrichtung 23 abgebildet. Hierbei wird der Eingang der Lichtleiteinrichtung 23 vollständig ausgeleuchtet. Die Lichtleiteinrichtung 23 umfaßt, wie in Fig.3 dargestellt, ein Bündel von einzelnen Lichtleitfasern 24, die gebündelt zu der Auswerteeinrichtung 11 verlaufen und dort mit ihren ausgangsseitigen Enden in die Auswerteeinrichtung 11 zur spektrographischen Untersuchung eingekoppelt sind.

Für den Referenzlichtstrahl 9 ist eine eigene Lichtleiteinrichtung 25 mit einer Vielzahl von Lichtleitfasern 26 vorgesehen, welche den Referenzlichtstrahl 9 nach dem Strahlteiler 8 aufnimmt und an den Eingang der Auswerteeinrichtung 11 überträgt. Beide Lichtleiteinrichtungen 23 und 25 weisen vorzugsweise die gleiche Anzahl N von Lichtleitfasern 24, 26 auf. Zur vollständigen Ausleuchtung der eingangsseitigen Enden der Lichtleitfasern 26 mittels des Referenzlichtstrahls 9 ist diesen wiederum eine geeignete Sammellinse 22a vorgeschaltet. Die Sammellinsen 22 und 22a bestehen aus einem UV-transparenten Quarzglas, beispielsweise aus Suprasil.

Durch die Aperturabbildung auf die Eingangsseiten der Lichtleiteinrichtungen 23 und 25 ist die Ausleuchtung der Lichtleiteinrichtungen unabhängig von der Größe eines Meßfensters an der Probe. Um das Licht in der Apertur weitestgehend auszunutzen, sind die Eingänge der Lichtleiteinrichtungen 23 und 25 der Form der Öffnung 4b der Aperturblende 4 angepaßt, wie dies aus einem Vergleich der Fig.2 und Fig.3 unmittelbar hervorgeht. Die Ausgänge der Lichtleiteinrichtungen 23 und 25, die mit dem Eingang der Auswerteeinrichtung 11 gekoppelt werden, sind in ihrer Form einem Empfänger des Spektrographen 12 angepaßt.

Die Herstellung der Lichtleiteinrichtungen 23 und 25 mit Eingangsseiten in Form der Aperturblendenöffnung erfolgt mittels einer Blechblende mit einer entsprechenden Öffnung. Diese wird über ein größeres Faserbündel gestreift, so daß lediglich die interessierenden Fasern im Öffnungsbereich übrig bleiben.

Für die Lichtleiteinrichtungen 23 und 25 werden in einer ersten Ausgestaltungsvariante Bündel von Lichtleitfasern 24 bzw. 26 verwendet, deren ein- und ausgangsseitige Enden in willkürlicher Lagezuordnung zueinander stehen. Damit ist in der Regel eine hinreichend genaue Auswertung erzielbar. Um höheren Anforderungen bezüglich der Auswertung des übertragenen Lichtes gerecht zu werden ist es möglich, für die Positionen der Lichtleitfaser 24 bzw. 26 an den ein- und ausgangsseitigen Enden der Lichtleiteinrichtungen 23 bzw. 25 zu ermitteln, auf der Grundlage dieser Erkenntnis die Auswerteeinrichtung 11 entsprechend zu programmieren und dadurch bei der Auswertung die Herkunft der in mit der Lichtleitfasern 24 bzw. 26 übertragenen Information bezogen auf den Ort in der Lichtquelle bzw. der jeweiligen Viertelpupille zu berücksichtigen. Es besteht somit ein eindeutiger Zusammenhang zwischen einer einzelnen Lichtleitfaser und einem bestimmten Flächenabschnitt der Viertelpupillenform.

In einer diesbezüglichen zweiten Ausgestaltungsvariante kann dagegen vorgesehen sein, den einzelnen Lichtleitfasern 24 bzw. 26 an den ein- und ausgangsseitigen Enden der Lichtleiteinrichtungen 23 bzw. 25 definierte Positionen zuzuordnen. Dabei wird am Eingang der Lichtleiteinrichtung 23 die Viertelpupillenform auf die feldartig angeordneten, eingangsseitigen Enden der Lichtleitfasern 24 abgebildet. Wie bei der ersten Ausgestaltungsvariante wird somit auch hier ein eindeutiger Zusammenhang zwischen einer einzelnen Lichtleitfaser und einem bestimmten Flächenabschnitt der Viertelpupillenform erzielt. Die Anordnung der einzelnen Lichtleitfasern 24 kann entsprechend einem stetig steigenden oder stetig sinkenden Einfallswinkel an der Probe bzw. in der Reihenfolge ihrer Anordnung innerhalb der Viertelpupillenform erfolgen. Dies hätte den Vorteil, daß Intensitätsschwankungen unter benachbarten Lichtleitfasern 24 einer Lichtleiteinrichtung 23 gering bleiben, wodurch Übersprecheffekte zwischen den benachbarten Lichtleitfasern verringert werden.

Die ausgangsseitigen Enden der einzelnen Lichtleitfasern 24 sind im Hinblick auf die Verwendung eines CCD-Detektors 13 in der Auswerteeinrichtung 11 am Eingang derselben wegen der spektralen Auflösung linienförmig aufgespreizt.

Wie Fig.3 weiter entnommen werden kann, sind die Lichtleitfasern 24 bzw. 26 jeweils zu einem Kanal KO bzw. KR zusammengefaßt, wobei die Anordnungsvorschrift für die einzelnen Lichtleitfasern 24 bzw. 26 in den beiden Kanälen von der Wahl der ersten oder zweiten der vorgenannten Ausgestaltungsvarianten abhängig ist. Auch können beispielsweise die gleichen Einfallswinkeln entsprechenden Lichtleitfasern der hier unterschiedlichen Kanäle in Gruppen zusammengefaßt werden.

Zur Unterscheidung zwischen den beiden Kanälen KO und KR ist zwischen diesen jeweils ein Trennabstand T vorgesehen. Die einzelnen Kanäle sind jeweils durch einen Trennabstand T von beispielsweise 0,4 mm bis 1 mm voneinander beabstandet, wobei die Gesamtlänge der hintereinander aufgereihten Kanäle KO und KR hier etwa 4 mm beträgt.

Das an den ausgangsseitigen Enden der Lichtleitfasern 24 bzw. 26 erhaltene Licht wird über den Spektrographen 12 an den CCD-Detektor 13 der Auswerteeinrichtung 11 übertragen. In dem hier dargestellten Ausführungsbeispiel wird ein abbildender Spiegel-Gitter-Spektrograph zusammen mit einem zweidimensionalen CCD-Detektor eingesetzt. Dieser CCD-Detektor 13 ist im Wellenlängenbereich von 190 nm bis 800 nm empfindlich. Durch die Verwendung eines rückseitig beleuchteten, UV-empfindlichen und gekühlten CCD-Detektors mit geringem Dunkelstrom ist ein schnelles Auslesen der Meßspektren innerhalb von 1 Sekunde möglich.

Zur Überwachung des Meßvorganges ist das von dem Pinholespiegel 21 abgezweigte Licht über eine Linsengruppe 31 in eine Einrichtung 27 zur visuellen Darstellung einkoppelbar. Diese ist beispielsweise eine Farb-CCD-Videokamera, die dazu dient, das zu untersuchende Gebiet der Probenoberfläche auf einem Monitor darzustellen, um beispielsweise eine visuelle Auswahl eines zu kontrollierenden Abschnittes zu ermöglichen, oder auch den Meßvorgang zu beobachten. Überdies kann das erhaltene Bildsignal zum Zweck einer zusätzlichen Prozeßüberwachung aufgezeichnet werden.

Zum Erhalt eines größeren Bildfeldes mit einem brillanteren Kontrast kann zusätzlich ein Objektiv 28, sozusagen als Übersichtsobjektiv, auf die Probe P gerichtet werden. Der Sichtstahl dieses zusätzlichen Objektivs 28 wird bevorzugt über einen teildurchlässigen Spiegel 29 und einen weiteren Umlenkspiegel 30 in die Linsengruppe 31 und anschließend in die Einrichtung zur visuellen Darstellung 27 eingekoppelt. Die Beleuchtung des von dem Objektiv 28 zu beobachtenden Ortes an der Probe P erfolgt über die ohnehin vorhandene Beleuchtungseinrichtung 1. Allerdings ist hierzu eine von dem Meßlichtstrahl 6 vollständig getrennte Übertragungseinrichtung vorgesehen. Zum Zweck einer flexiblen Anordnung umfaßt die Übertragungseinrichtung eine flexible Lichtleiteinrichtung 32 mit einer Vielzahl von Lichtleitfasern. In den Strahlengang 33 zur Beleuchtung des Beobachtungsortes können zur Verbesserung der Bildqualität geeignete, dem Fachmann an sich bekannte Filter 34 wie beispielsweise ein Gelbfilter eingeschaltet werden. Überdies ist in dem Beleuchtungsstrahlengang eine Verschlußblende 35 vorgesehen, mit der die Beleuchtung für das Objektiv 28 ein- und ausgestellt werden kann.

### Bezugszeichenliste

- 1: Beleuchtungseinrichtung
- 2: Halogenlampe
- 2a: Wendel
- 3: Deuteriumlampe
- 3a: Durchblicköffnung
- 4: Aperturblende
- 4a: Metallfolie
- 4b: Öffnung der Aperturblende
- 5: Linsenanordnung
- 6: Meßlichtstrahl
- 7: Feldblende
- 8: Strahlteiler
- 9: Referenzlichtstrahl
- 10: Objektlichtstrahl
- 11: Auswerteeinrichtung
- 12: Spektrograph
- 13: CCD-Detektor
- 15: Spiegelobjektiv
- 16: Fokusmeßsystem
- 17: Spiegel
- 18: Nievellieranordnung
- 19: Richtungskontrollstrahl
- 20: Umlenkspiegel
- 21: Pinholespiegel
- 22,22a: Sammellinse
- 23,25: Lichtleiteinrichtung
- 24,26: Lichtleitfaser
- 27: Einrichtung zur visuellen Darstellung
- 28: Übersichtsobjektiv
- 29: teildurchlässiger Spiegel
- 30: Umlenkspiegel
- 31: Linsengruppe
- 32: Lichtleiteinrichtung
- 33: Strahlengang
- 34: Filter
- 35: Verschlußblende
- P: Probe
- M: Meßort

## Patentansprüche

1. Optische Meßanordnung, insbesondere zur Schichtdickenmessung und zur Ermittlung optischer Materialeigenschaften einer Probe (P), umfassend:
- eine Beleuchtungseinrichtung (1) zur Abgabe eines Meßlichtstrahls (6),
- einen Strahlteiler (8) zur Aufteilung des Meßlichtstrahls (6) in einen Objektlichtstrahl (10) und einen Referenzlichtstrahl (9),
- ein Meßobjektiv zum Ausrichten des Objektlichtstrahls (10) auf einen Meßort (M) an der Oberfläche der Probe (P) und zum Erfassen des von dem Meßort (M) reflektierten Lichts, und
- eine Auswerteeinrichtung (11), in welche der von der Probe (P) reflektierte Objektlichtstrahl (10) und der Referenzlichtstrahl (9) eingekoppelt sind, zum Erhalt von Informationen über die Probe (P), insbesondere über an dieser vorhandene Schichtdicken,
**dadurch gekennzeichnet, daß** zur Einkopplung des Objektlichtstrahls (10) und des Referenzlichtstrahls (9) in die Auswerteeinrichtung (11) Lichtleiteinrichtungen (23, 25) mit einer Vielzahl N von Lichtleitfasern (24, 26) vorgesehen sind.

2. Optische Meßanordnung nach Anspruch 1, **dadurch gekennzeichnet, daß** für den Objektlichtstrahl (10) und den Referenzlichtstrahl (9) jeweils eine eigene Lichtleiteinrichtung (23, 25) vorgesehen ist.

3. Optische Meßanordnung nach Anspruch 1 oder 2, **dadurch gekennzeichnet, daß** die ausgangsseitigen Enden der Lichtleitfasern (24, 26) am Eingang der Auswerteeinrichtung (11) in Entsprechung zu einem an der Auswerteeinrichtung (11) vorgesehenen Empfänger, vorzugsweise linienartig, angeordnet sind.

4. Optische Meßanordnung nach einem der Ansprüche 1 bis 3, **dadurch gekennzeichnet, daß** in dem Meßlichtstrahl (6) vor dem Strahlteiler (8) eine Aperturblende (4) angeordnet ist.

5. Optische Meßanordnung nach Anspruch 4, **dadurch gekennzeichnet, daß** die Aperturblende (4) eine Durchtrittsöffnung (4b) in Form eines Viertelkreisringes aufweist.

6. Optische Meßanordnung nach Anspruch 4 oder 5, **dadurch gekennzeichnet, daß** die eingangsseitigen Enden der Lichtleitfasern (24, 26) für den Objektlichtstrahl (10) und den Referenzlichtstrahl (9) über eine Fläche verteilt angeordnet sind, auf welche die Form der Öffnung (4b) der Aperturblende (4) abgebildet wird.

7. Optische Meßanordnung nach einem der Ansprüche 2 bis 6, **dadurch gekennzeichnet, daß** die eingangsseitigen und ausgangsseitigen Enden der Lichtleitfasern (24, 26) für beide Lichtleiteinrichtungen (23, 25) in gleicher Lagebeziehung zueinander angeordnet sind.

8. Optische Meßanordnung nach einem der Ansprüche 1 bis 7, **dadurch gekennzeichnet, daß** ein weiteres Objektiv (28) auf einen Beobachtunsort an der Probe (P) gerichtet ist, in welches Licht der Beleuchtungseinrichtung (1) einblendbar ist, wobei die Einkopplung des Lichtes in das weitere Objektiv (28) über eine von dem Meßlichtstrahl (6) getrennte Übertragungseinrichtung erfolgt.

9. Optische Meßanordnung nach Anspruch 8, **dadurch gekennzeichnet, daß** von dem weiteren Objektiv (28) aufgefangenes Licht des Beobachtungsortes in eine Einrichtung (27) zur visuellen Darstellung einkoppelbar ist.

10. Optische Meßanordnung nach einem der Ansprüche 1 bis 9, **dadurch gekennzeichnet, daß** das Meßobjektiv ein Spiegelobjektiv (15) mit einer numerischen Apertur kleiner als 0,3 ist, und daß die Beleuchtungseinrichtung (1) eine Halogenlampe (2) und eine Deuteriumlampe (3) umfaßt.
